(19) Europäisches Patentamt
European Patent Office
Office européen des brevets

(11) **EP 4 726 876 A1**

(12) **EUROPEAN PATENT APPLICATION**
published in accordance with Art. 153(4) EPC

(43) Date of publication:
**15.04.2026 Bulletin 2026/16**

(21) Application number: **24856734.9**

(22) Date of filing: **13.08.2024**

(51) International Patent Classification (IPC):
$H01M\ 50/198^{(2021.01)}$    $H01M\ 50/105^{(2021.01)}$
$H01M\ 50/126^{(2021.01)}$    $H01M\ 50/116^{(2021.01)}$
$H01M\ 50/211^{(2021.01)}$    $C09J\ 7/30^{(2018.01)}$

(52) Cooperative Patent Classification (CPC):
C09J 7/30; H01M 50/105; H01M 50/116;
H01M 50/126; H01M 50/186; H01M 50/198;
H01M 50/211; Y02E 60/10

(86) International application number:
**PCT/KR2024/012083**

(87) International publication number:
**WO 2025/042122 (27.02.2025 Gazette 2025/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.08.2023 KR 20230108631**

(71) Applicant: **LG Energy Solution, Ltd.
Seoul 07335 (KR)**

(72) Inventors:
• **SONG, Dae Woong
  Daejeon 34122 (KR)**
• **HWANG, Soo Ji
  Daejeon 34122 (KR)**
• **YU, Hyung Kyun
  Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **SECONDARY BATTERY**

(57)     A secondary battery according to the present invention is characterized in comprising: an electrode assembly; an outer film which has an inner space for accommodating the electrode assembly and which has an outer material opening for communicating the inner space with the outside; and a cover member covering the outer material opening of the outer film, wherein the outer film has a sealing surface at which the inner surface and the outer surface of the outer film meet in a direction perpendicular to the outer material opening and are joined by an adhesive film, and the adhesive film has a sealing index (SI) defined by the static contact angle of an adhesive surface and a peel strength in an electrolyte of 1.00 to 6.00, and a secondary battery with secured sealing durability and improved energy density may be provided.

[FIG. 2]

EP 4 726 876 A1

Description

## TECHNICAL FIELD

The present invention relates to a secondary battery and more particularly, to a secondary battery with improved energy density and safety.

## BACKGROUND ART

In general, the types of secondary batteries include nickel cadmium batteries, nickel hydrogen batteries, lithium ion batteries, and lithium ion polymer batteries. The secondary batteries are used in small products such as digital cameras, P-DVDs, MP3Ps, mobile phones, PDAs, portable game devices, power tools, and E-bikes, as well as large products requiring high output such as electric vehicles and hybrid vehicles, power storage devices that store surplus generated power or renewable energy, and backup power storage devices.

In order to manufacture such a secondary battery, first, an electrode active material slurry is applied to a positive electrode current collector and a negative electrode current collector to manufacture a positive electrode and a negative electrode, and the electrodes are laminated on both sides of a separator to form an electrode assembly having a predetermined shape. Then, the electrode assembly is accommodated in a battery case, and an electrolyte is injected and then sealed.

Secondary batteries are classified into a pouch-type and a can-type, depending on the material of the case that accommodates the electrode assembly. The pouch-type accommodates the electrode assembly in a pouch made of a flexible polymer material. The can-type accommodates the electrode assembly in a case made of a material such as metal and plastic.

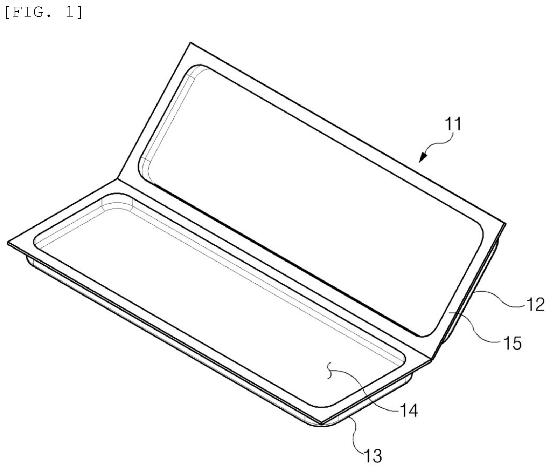

FIG. 1 is a perspective view of a case of the conventional pouch-type secondary battery. A pouch, which is the case of a pouch-type secondary battery, is manufactured by performing a press process on a flexible pouch film laminate to form cup parts (12, 13) on the upper and lower parts, or on any one side among them. If the cup parts (12, 13) are formed, an electrode assembly is accommodated in an inner receiving space (14) of the cup part, and a portion or all of a terrace part (15) surrounding the receiving space (14) is sealed to manufacture a secondary battery.

The pouch-type secondary battery with the structure has a problem in that it has a spatial disadvantage in the production of a battery module or pack due to the presence of the terrace part (15), and thus, energy density is reduced. In order to utilize space, the terrace part (15) is folded and finished, but in this case, there is a problem in that the cost increases due to the additional process for conducting the same, and problems such as a decrease in the durability of the pouch in the folded portion and a decrease in the insulation performance may occur. In addition, there is also a problem in that it is difficult to maintain the sealing properties of the sealing part where the electrode lead is drawn out.

In addition, the molding depth of the cup part formed on the pouch film is limited depending on the material properties of the pouch film. Accordingly, it is difficult to sufficiently deeply mold the cup part to increase the battery capacity, and the material and thickness of the pouch film is also selected within restrictions. As the thickness of the pouch film decreases during the molding of the cup part, defects such as cracks are likely to occur in an outer material. In addition, it is common for pouch-type cases to additionally have a pocket part that captures gas generated during activation, but the pocket part is removed after the gas in the pocket part is exhausted through the degassing process. As a result, there is a problem in that a portion of the case is always discarded.

## DISCLOSURE OF THE INVENTION

## TECHNICAL PROBLEM

The present invention is to solve the above problems and to provide a secondary battery that may solve various problems occurring in the process of forming a cup part for accommodating an electrode assembly.

In addition, the present invention is to provide a secondary battery that may prevent the disposal of an outer material, which occurs after a degassing process.

In addition, the present invention is to provide a secondary battery that may improve safety by maintaining the sealability and sealing durability of a sealing part where an outer film covering an electrode assembly comes into contact as well as the sealability at a cover member part at an excellent level.

The tasks of the present invention are not limited to the tasks mentioned above, and other tasks that are not mentioned may be clearly understood by those skilled in the art from the description below.

**TECHNICAL SOLUTION**

[1] A secondary battery according to an embodiment of the present invention is characterized in comprising: an electrode assembly; an outer film which has an inner space for accommodating the electrode assembly and which has an outer material opening for communicating the inner space with the outside; and a cover member covering the outer material opening of the outer film, wherein the outer film has a sealing surface at which the inner surface and the outer surface of the outer film meet in a direction perpendicular to the outer material opening and are joined by an adhesive film, and the adhesive film has a sealing index (SI) defined by Formula 1 below of 1.00 to 6.00.

$$[\text{Equation } 1]$$

$$SI = PS/CA$$

In Equation 1, SI of the adhesive film is a sealing index, CA is a unitless number of the contact angle at the surface of an adhesive surface of the adhesive film, and PS is a unitless number with the unit of gf/25mm, which is a peel strength in an electrolyte and is obtained from a T-peel peeling test at a speed of 300 mm/sec after immersing a sealed pouch-type case in an electrolyte solution for 24 hours.

[2] In [1] above, the contact angle (CA) may be 80° or more.

[3] In [1] and/or [2] above, the peel strength (PS) in an electrolyte may be 100 gf/25 mm or more.

[4] In at least one of [1] to [3] above, the sealing index may be 1.30 to 5.50.

[5] In at least one of [1] to [4] above, the secondary battery may further comprise a gasket member disposed between the cover member and the outer film.

[6] In at least one of [1] to [5] above, the adhesive film may comprise a rubber-based adhesive resin, and the rubber-based adhesive resin may comprise one or more selected from the group consisting of natural rubber, epoxidized natural rubber, polyisobutylene rubber, styrene-butadiene rubber, styrene-isobutylene rubber, epoxidized styrene-butadiene-styrene rubber, styrene-isobutylene-styrene rubber, epoxidized styrene-isobutylene-styrene rubber, styrene-ethylene-alpha-olefin-styrene rubber, and ethylene-propylene-diene rubber.

[7] In at least one of [1] to [6] above, the adhesive film may have a single-layer structure composed of an adhesive layer, a double-layer structure composed of a base film and an adhesive layer disposed on the base film, or a three-layer structure composed of a base film and adhesive layers disposed on both sides of the base film, and the adhesive layer may comprise a rubber-based adhesive resin.

[8] In at least one of [1] to [7] above, the base film may comprise one or more selected from the group consisting of polyethylene terephthalate, polyethylene naphthalate, polyimide, cast polypropylene, high-density polyethylene and low-density polyethylene.

[9] In at least one of [1] to [8] above, the outer film may comprise a sealant layer on the inner surface and an outer insulating layer on the outer surface, and the sealant layer may comprise one or more selected from the group consisting of polypropylene, cast polypropylene, acid-modified polypropylene, and polypropylene-butylene-ethylene copolymer.

[10] In at least one of [1] to [9] above, the outer film may comprise a sealant layer on the inner surface and an outer insulating layer on the outer surface, and the outer insulating layer may comprise one or more selected from the group consisting of polyethylene terephthalate and nylon.

[11] In at least one of [1] to [10] above, the outer film may have a subsequently laminated structure of a sealant layer, a gas barrier layer and an outer insulating layer.

[12] A battery module according to another embodiment of the present invention comprises a plurality of the above-described pouch-type secondary batteries.

**ADVANTAGEOUS EFFECTS**

The secondary battery according to an embodiment of the present invention may provide an outer material without molding a cup part for accommodating an electrode assembly, so that battery capacity may be easily increased by increasing the size of the outer material, the material and thickness of a sheet for manufacturing the outer material may be selected relatively freely, and defects such as cracks may be unlikely to occur.

In addition, the secondary battery according to an embodiment of the present invention may prevent unnecessary disposal of an outer material, since electrolyte injection and degassing may be performed through the electrolyte injection hole of a cover member.

Furthermore, the secondary battery according to an embodiment of the present invention may improve sealing processability and safety by improving sealing performance and sealing durability at a sealing part formed by the outer film contacting each other in a more simplified manner.

**BRIED DESCRIPTION OF DRAWINGS**

FIG. 1 is a perspective view of a pouch-type case of the conventional structure.
FIG. 2 is an exploded assembly diagram of a secondary battery according to an embodiment of the present invention.
FIG. 3 is a perspective view of a secondary battery according to an embodiment of the present invention.
FIG. 4 is a cross-sectional view along line A-A of the secondary battery in FIG. 3.
FIG. 5 is a cross-sectional view showing another embodiment of a gasket member in the secondary battery in FIG. 3.
FIG. 6 is an enlarged cross-sectional view of part B in FIG. 3 and an enlarged cross-sectional view in case where an adhesive film having a single-layer structure is applied.
FIG. 7 is an enlarged cross-sectional view of part B in FIG. 3 and an enlarged cross-sectional view in case where an adhesive film having a double-layer structure is applied.
FIG. 8 is an enlarged cross-sectional view of part B in FIG. 3 and an enlarged cross-sectional view in case where an adhesive film having a double-layer structure is applied.
FIG. 9 is an enlarged cross-sectional view of part B in FIG. 3 and an enlarged cross-sectional view in case where an adhesive film having a three-layer structure is applied.

**BEST MODE FOR CARRYING OUT THE INVENTION**

The advantages and features of the present invention, and the methods for achieving them, will become clear with reference to the embodiments described in detail below together with the accompanying drawings. However, the present invention is not limited to the embodiments described below, but can be achieved in various different forms, and the embodiments are provided only to make the disclosure of the present invention complete and to fully inform a person having ordinary skill in the art to which the present invention belongs of the scope of the invention, and the present invention is defined only by the scope of the claims. Like reference numerals refer to like elements throughout the specification.

Unless otherwise defined, all terms (including technical and scientific terms) used in this specification may be used with a meaning that can be commonly understood by a person of ordinary skill in the art to which the present invention belongs. In addition, terms defined in commonly used dictionaries shall not be ideally or excessively interpreted unless explicitly specifically defined.

The terminology used in this specification is for the purpose of describing embodiments and is not intended to limit the invention. In this specification, the singular also includes the plural unless specifically stated otherwise. The terms "comprises" and/or "comprising" as used in the specification do not exclude the presence or addition of one or more other components in addition to the components mentioned.

Hereinafter, the embodiments of the present invention will be explained in more detail with reference to the attached drawings.

The secondary battery described in this specification includes at least one of the technical configurations described below, and may include any combination between technically possible configurations among the technical configurations below.

In this specification, if a part includes a certain component, this does not mean that other components are excluded, but rather that other components may be included, unless otherwise specifically stated.

In this specification, the upper part of the drawings may be referred to as the "upper part" or "upper side" of the configuration depicted in the drawing, and the lower part thereof may be referred to as the "lower part" or "lower side." In addition, the remaining part between the upper part and the lower part of the configuration depicted in the drawings or the remaining part excluding the upper part and the lower part may be referred to as the "side part" or "side." The relative terms such as "upper part," and "upper side" may be used to explain the relationship between the configurations depicted in the drawings, and the present disclosure is not limited by the terms.

In this specification, the direction toward the inner space of a structure may be referred to as "inside," and the direction protruding into the open outer space may be referred to as "outside." The relative terms such as "inside," and "outside" may be used to explain the relationship between the configurations depicted in the drawings, and the present disclosure is not limited by the terms.

In this specification, the term "A and/or B" means A, or B, or A and B.

In this specification, if a part is connected to another part, this includes not only cases where they are directly connected, but also cases where they are connected with another structure in between.

**Secondary Battery**

The secondary battery according to an embodiment of the present invention comprises: an electrode assembly; an outer film which has an inner space for accommodating the electrode assembly and which has an outer material opening for communicating the inner space with the outside; and a cover member covering the outer material opening of the outer film, wherein the outer film has a sealing surface at which the inner surface and the outer surface of the outer film meet in a direction perpendicular to the outer material opening and are joined by an adhesive film, and the adhesive film has a sealing index (SI) defined by Formula 1 below of 1.00 to 6.00.

$$[\text{Equation 1}]$$

$$SI = PS/CA$$

In Equation 1, SI of the adhesive film is a sealing index, CA is a unitless number, which is the contact angle at the surface of the adhesive surface of the adhesive film, and PS is a unitless number with the unit of gf/25mm, which is a peel strength in an electrolyte obtained from a T-peel peeling test at a speed of 300 mm/sec after immersing a sealed pouch-type case in an electrolyte solution for 24 hours.

**1) Adhesive Film and Sealing Index**

According to an embodiment of the present invention, the secondary battery is characterized in that the outer film has a sealing surface in which the inner and outer surfaces meet in a direction perpendicular to the outer material opening and are joined by an adhesive film, and the adhesive film has a sealing index (SI) of 1.00 to 6.00.

A general pouch-type case (10) according to FIG. 1 has problems in process and energy density due to the presence of a terrace part (15), and the pouch-type case having a novel structure to improve the problems has a problem in sealing durability.

To solve the problem, a method may be adopted in which an electrode assembly is enclosed in the width direction using a predetermined sheet such as a pouch film, and the openings at both ends are covered with caps for sealing. A pouch-type battery case having the structure may be sealed by enclosing the electrode assembly in the width direction using a pouch film and then sealing the sheet on one side.

One of the sealing methods is to seal by bringing the innermost layers of the pouch film into contact with each other, and this method reduces the number of terrace parts that is necessary to be folded compared to the conventional structure, but the problems of the conventional process may not be solved as long as the folding process of the terrace part exists, and the advantage of changing the mass production process is very insignificant compared to utilizing the existing process.

Another method is to prevent the formation of a terrace part by bringing the innermost and outermost layers of the pouch film into contact. However, in this case, since the properties of polymers forming the innermost and outermost layers are different, there is a problem with sealing even if heat-melting is performed. Heat-melting is a method of bonding two surfaces by applying heat and pressure, but it is difficult to apply pressure due to the structure thereof, so the application of the heat-melting process is difficult.

In the case of the secondary battery according to an embodiment of the present invention, even if the sealant layer and the outer insulating layer of the outer film are sealed, since the sealing is performed using an adhesive film, pressurization is unnecessary during sealing, so the difficulty in the sealing process due to the structural problem of not being easy to pressurize may be resolved, and the problem of sealing durability may be resolved while accomplishing a secondary battery without a terrace part.

However, even in a case of using an adhesive film for sealing, problems with sealing durability may occur depending on the characteristics of the adhesive film. Due to the characteristics, the adhesive film may have different peel strengths on the two sides if adhered to the sealant layer and the outer insulating layer of the outer film, and the peel strength may be weakened if exposed to an electrolyte compared to a case of sealing by heat fusion.

Accordingly, the present invention aims to solve the problems of weakening of the adhesiveness and peel strength upon exposure to electrolyte, or leakage of electrolyte, by introducing a sealing index (SI). Accordingly, the sealing index is characterized by being 1.00 to 6.00, and the sealing index is defined by Equation 1 below.

$$[\text{Equation 1}]$$

$$SI = PS/CA$$

In Equation 1, SI of the adhesive film is the sealing index, CA is a unitless number with the unit of °, which is a contact angle at the surface of the adhesive surface of the adhesive film, and PS is a unitless number with the unit of gf/25mm, which is a peel strength in an electrolyte and obtained from a T-peel peeling test at a speed of 300 mm/sec after immersing a sealed pouch-type case in an electrolyte solution for 24 hours.

The contact angle at the surface of the adhesive surface of the adhesive film may be at least greater than the surface contact angle of the sealant layer or the outer insulating layer of the outer film, which is an adherend surface, and preferably greater than the surface contact angle of the sealant layer and the outer insulating layer of the outer film. Specifically, the contact angle may be 80° or greater, and the contact angle may be obtained by dropping a drop of distilled water on the surface of a target to be measured and then measuring the angle formed between the surface and the water droplet within 5 seconds. The contact angle may preferably be 90° or greater, 95° or greater, 100° or greater, or 105° or greater. In addition, the contact angle may be at most 150°, and may be 140° or less, 130° or less, or 125° or less.

The contact angle at the surface of the adhesive surface of the adhesive film may be determined by various factors such as the material applied as the adhesive layer of the adhesive film and the degree of surface treatment, and may be a measure expressing the degree of hydrophobicity. Therefore, considering the possibility of electrolyte leakage from the inside and the possibility of moisture penetration from the outside, it is desirable to have a contact angle at the same level as described above.

The peel strength in an electrolyte may be 100 gf/25 mm or more. The peel strength in an electrolyte may be obtained by impregnating the adhesive film in a state of the adhesive film being adhered between the sealant layer and the outer insulating layer of a pouch cover, in an electrolyte (a mixture of an organic solvent in which ethylene carbonate (EC), ethyl methyl carbonate (EMC), and dimethylene carbonate (DMC) are mixed in a volume ratio of 3:3:4, and a lithium salt of 1.0 M $LiPF_6$) for 24 hours, and then performing a T-peel peeling test at a speed of 300 mm/sec.

The peel strength in an electrolyte may be 100 gf/25mm or more, 120 gf/25mm or more, 150 gf/25mm or more, 180 gf/25mm or more, or 200 gf/25mm or more, more preferably, 230 gf/25mm or more, and may have an upper limit of 600 gf/25mm or less. However, practically, if the peel strength is 600 gf/25mm or more, the achievement may be difficult due to the adhesive film, and even if achieved, in order to have such a peel strength, a material having properties opposite to those of the electrolyte is required to be applied, and therefore, a material having high affinity for moisture is necessary, and accordingly, a problem of vulnerability to moisture penetration from the outside may occur.

The sealing index is characterized by being 1.00 to 6.00. The sealing index is a ratio of the contact angle (unitless number in case of unit:°) to the peel strength in an electrolyte (unitless number in case of unit: gf/25mm), and the sealing durability may be achieved at a desired level only in case where the sealing index is 1.00 to 6.00 before the ranges of the peel strength and contact angle are satisfied as described above.

The sealing durability of general secondary batteries may be affected by various factors. For example, moisture penetration from the outside may be a problem, and internal pressure increase due to electrolyte leakage and gas generation may be a problem.

In order to reduce the possibility of moisture penetration, the adhesive surface needs to be as hydrophobic as possible, and the material applied as the adhesive film also needs to be a hydrophobic substance, which may be expressed through the contact angle at the surface of the adhesive surface of the adhesive film. In addition, in order to eliminate the possibility of electrolyte leakage, the adhesive strength needs to be excellent and the peel strength in an electrolyte needs to be high. In order for the peel strength in an electrolyte to be high, the peel strength under general conditions needs to be high, and at the same time, an electrolyte solution needs to have low affinity for the electrolyte.

In order to achieve the sealing durability of the secondary battery according to an embodiment of the present invention, it is necessary to consider all of the above-mentioned characteristics, which may be expressed by the sealing index described above. Through this, a sealing part with excellent sealing durability that may prevent moisture penetration from the ratio of the peel strength in an electrolyte and contact angle while reducing the possibility of electrolyte leakage and maintaining a certain level of adhesive strength.

The secondary battery needs to apply an adhesive film so that the sealing index satisfies 1.00 to 6.00, and preferably, the sealing index may be 1.10 or more, 1.20 or more, 1.25 or more, 1.30 or more, or 1.33 or more, and preferably, the sealing index may be 6.00 or less, 5.80 or less, 5.70 or less, 5.60 or less, 5.50 or less, or 5.45 or less.

The adhesive film may include a rubber-based adhesive resin, and the rubber-based adhesive resin may include one or more selected from the group consisting of natural rubber, epoxidized natural rubber, polyisobutylene rubber, styrene-butadiene rubber, styrene-isobutylene rubber, epoxidized styrene-butadiene-styrene rubber, styrene-isobutylene-styrene rubber, epoxidized styrene-isobutylene-styrene rubber, styrene-ethylene-alpha-olefin-styrene rubber, and ethylene-propylene-diene rubber.

In the case of the rubber-based adhesive resin, it may be a material that has the basic conditions that may satisfy the sealing index above, and the material may be post-processed to satisfy the sealing index described above through additional surface treatment, or the like. If the rubber-based adhesive resin is not applied and an acrylic adhesive resin is applied, even if the post-processing is performed, the peel strength in an electrolyte is significantly low, making it difficult to satisfy the sealing index. Therefore, it may be desirable to utilize the rubber-based adhesive resin as the material of the adhesive film.

## 2) Structure of Secondary Battery

Hereinafter, the secondary battery according to the present invention will be explained with reference to the attached drawings.

The secondary battery according to an embodiment of the present invention comprises: an electrode assembly; an outer film having an internal space for accommodating the electrode assembly and an outer material opening for communicating the inner space with the outside; and a cover member for covering the outer material opening of the outer film, wherein the outer film is characterized in that it has a sealing surface at which an inner surface and an outer surface of the outer film meet in a direction perpendicular to the outer material opening and are joined by an adhesive film.

### *Electrode Assembly or the like*

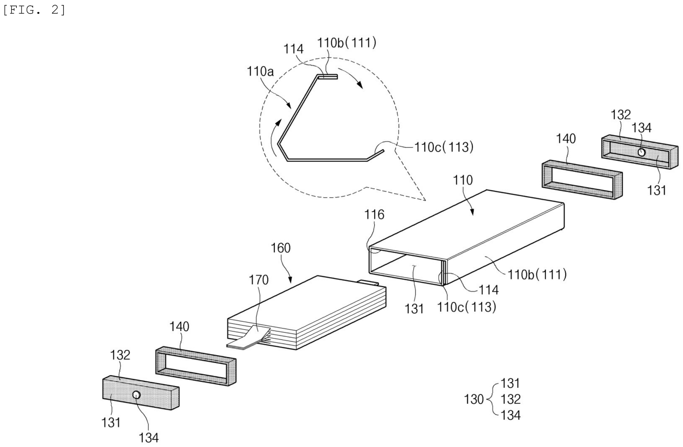

According to an embodiment, the electrode assembly (160) may be formed by alternately stacking electrodes and separators. The electrode assembly (160) illustrated in FIG. 2 may be formed into a predetermined shape by applying a slurry obtained by mixing an electrode active material, a binder, and/or a conductive material to a positive electrode current collector and a negative electrode current collector to manufacture a positive electrode and a negative electrode, and then stacking them on both sides of a separator. The electrode assembly (160) may be enclosed by an outer film (110) and sealed by an adhesive film (114). In an embodiment, the types of the electrode assembly (160) may include, but are not limited to, a stack type, a jelly roll-type, a stack and folding type, or the like.

In an embodiment, the electrode assembly (160) may include two types of electrodes, a positive electrode and a negative electrode, and a separator interposed between the electrodes to mutually insulate the electrodes. The positive electrode and the negative electrode may have a structure in which an active material slurry is applied to an electrode current collector in the form of a metal foil or metal mesh including aluminum and copper, respectively. The slurry may be formed by stirring a granular active material, an auxiliary conductor, a binder, and a conductive material while a solvent is added. The solvent may be removed in a subsequent process.

An electrode tab (170) is connected to each of the positive and negative electrodes of the electrode assembly (160), and may protrude outwardly from the electrode assembly (160) to serve as a path through which electrons may move between the inside and the outside of the electrode assembly (160). The electrode current collector of the electrode assembly (160) may be composed of a portion where an electrode active material is applied and a terminal portion where the electrode active material is not applied, i.e., a non-coated portion. The electrode tab (170) may be formed by cutting the non-coated portion or by connecting a separate conductive member to the non-coated portion by ultrasonic welding, or the like. The electrode tabs (170) may protrude in different directions from the electrode assembly (160), without limitation, and may be formed by protruding in various directions, such as protruding side by side in the same direction from one side.

An electrode lead (not shown) may supply electricity to the outside of a secondary battery (100), and this role may be replaced by an electrode terminal (134) included in a cover member (130). However, as a different embodiment, a through hole may be formed in the cover member (130) so that the electrode lead instead of the electrode terminal (134) may be pulled out to the outside. In this case, the electrode lead (180) may have one end connected to the electrode tab (170) of the electrode assembly (160) by spot welding or the like, and the other end may protrude to the outside through a through hole formed in the cover member (130). The electrode lead may include a positive lead having one end connected to the positive tab and extending in the direction where the positive tab protrudes, and a negative lead having one end connected to the negative tab and extending in the direction where the negative tab protrudes.

Both the positive lead and the negative lead may protrude outwardly through the throughhole of the cover member (130). Therefore, electricity generated inside the electrode assembly (160) may be supplied to the outside. In addition, since the electrode tabs (170) are formed so that the positive tabs and the negative tabs protrude in various directions, the positive lead and the negative lead may also extend in various directions, respectively. In an embodiment, the positive lead and the negative lead may be formed of different materials. That is, the positive lead may be formed of the same aluminum (Al) material as the positive current collector, and the negative lead may be formed of the same copper (Cu) material or a nickel (Ni)-coated copper material as the negative current collector. A portion of the electrode lead protruding outwardly may be a terminal part and be electrically connected to an external terminal.

An electrolyte is for moving lithium ions produced by the electrochemical reaction of the electrode during charging/discharging of the pouch-type secondary battery (100), and may include a non-aqueous organic electrolyte solution using a mixture of a lithium salt and an organic solvent, or a polymer using a polymer electrolyte. Furthermore, the electrolyte may include a solid electrolyte of a sulfide type, an oxide type, or a polymer type, and such a solid electrolyte may have flexibility that may be easily deformed by an external force.

*Outer Film*

An outer film may be an outer material that accommodates the electrode assembly (160). The outer film (110) may include an inner space (115) that accommodates the electrode assembly (160). The outer film (110) may include an outer material opening (116) that communicates the inner space (115) with the outside of the outer film (110). The outer material opening (116) may be provided at each of the longitudinal ends of the outer film (110). The outer material opening (116) may be sealed by a cover member (130) and a gasket member (140), that will be described later.

The outer film (110) may be obtained from a predetermined sheet (110a). The predetermined sheet (110a) may be a sheet having a first end (110b) and a second end (110c) spaced apart from the first end (110b) in a predetermined direction. If the sheet (110a) is rolled or folded so that the first end (110b) and the second end (110c) meet, the outer film (110) may be obtained.

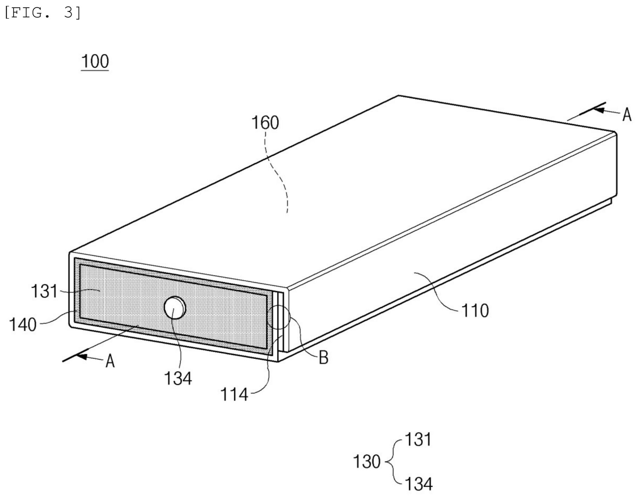

The first end (110b) and the second end (110c) may be joined to each other, and in this case, the inner surface of the first end (110b) may be joined to the outer surface of the second end (110c) as shown in FIG. 3. An adhesive film may be attached to this portion to form a sealing part. Since the sealing using the adhesive film of the first end (110b), for example, the outer insulating layer (111), and the second end (110c), for example, the sealant layer (113), has been described above, a detailed description will be omitted.

The sheet (130a; see FIG. 3), for example, a pouch film, may be a sheet including a metal layer such as aluminum or stainless steel. The sheet (130a) may also be a laminate sheet further including a resin layer laminated on the metal layer. The resin layer may include a first resin layer disposed on the inner surface of the metal layer. The first resin layer may be a layer formed of polypropylene (PP) or polyphthalamide (PPA). Since the first resin layer may require high insulation and corrosion resistance, the first resin layer may be formed of another resin satisfying the requirements. The resin layer may include a second resin layer disposed on the outer surface of the metal layer. The second resin layer may be a layer formed of polyethylene terephthalate (PET). Since the second resin layer may require the protection and insulation of the secondary battery (100), the second resin layer may be formed of another resin satisfying the requirements.

In another embodiment, the sheet (130a) forming the outer film (110) may have a structure in which a sealant layer (113), a gas barrier layer (112), and an outer insulating layer (111) are sequentially laminated from the innermost side.

The outer insulating layer (111) is formed on the outer surface of the outer film to protect the secondary battery from friction and collision with the outside. The outer insulating layer (111) is made of a polymer and may electrically insulate the electrode assembly from the outside. The outer insulating layer (111) may be made of one or more materials selected from the group consisting of, for example, polyethylene, polypropylene, polycarbonate, polyethylene terephthalate, polyvinyl chloride, acrylic polymers, polyacrylonitrile, polyimide, polyamide, cellulose, aramid, nylon, polyester, polyparaphenylene benzobisoxazole, polyarylate, Teflon, and glass fiber. Among them, the outer insulating layer (111) is particularly preferably made of polyethylene terephthalate (PET), nylon, or a combination thereof, which has abrasion resistance and heat resistance.

The outer insulating layer (111) may have a single-layer structure made of one material. Alternatively, the outer insulating layer (111) may have a composite layer structure formed by forming layers of two or more materials, respectively.

The thickness of the outer insulating layer (111) may be 5 $\mu$m to 50 $\mu$m, specifically 7 $\mu$m to 50 $\mu$m, and more specifically 7 $\mu$m to 40 $\mu$m. If the thickness of the outer insulating layer (111) satisfies the above range, the pouch film laminate may have excellent external insulation, and since the thickness of the entire pouch is not thick, the energy density per volume of the secondary battery may be excellent.

The gas barrier layer (112) is laminated between the outer insulating layer (111) and the sealant layer (113) to secure the mechanical strength of the pouch, block the entrance and exit of gas or moisture from the outside of the pouch-type battery case, and prevent electrolyte leakage from the inside of the pouch-type battery case.

The gas barrier layer (112) may be formed of a metal, and specifically, may be formed of an aluminum alloy thin film. If the gas barrier layer is formed using an aluminum alloy thin film, a mechanical strength higher than a predetermined level may be secured, while being light in weight and securing complementary properties for the electrochemical properties of the electrode assembly and the electrolyte and heat dissipation properties, or the like. The aluminum alloy thin film may include one or two or more selected from the group consisting of metal elements other than aluminum, for example, iron (Fe), copper (Cu), chromium (Cr), manganese (Mn), nickel (Ni), magnesium (Mg), silicon (Si) and zinc (Zn).

Meanwhile, the thickness of the gas barrier layer (112) may be 40 $\mu$m to 100 $\mu$m, specifically 50 $\mu$m to 90 $\mu$m, and more specifically 55 $\mu$m to 85 $\mu$m. If the thickness of the gas barrier layer (112) satisfies the above range, the moldability and gas barrier performance are excellent during forming a cup part.

The sealant layer (113) may be a layer located at the innermost side of the outer film (110).

The sealant layer (113) comes into contact with the electrolyte and electrode assembly, and is required to completely seal the inside to block material movement between the inside and the outside, so it is required to have insulation and corrosion resistance, and have high sealing properties for sealing with the upper and lower caps.

The sealant layer (113) may be formed of a polymer material, and may be formed of at least one selected from the group consisting of, for example, polyethylene, polypropylene, polycarbonate, polyethylene terephthalate, polyvinyl chloride, acrylic polymers, polyacrylonitrile, polyimide, polyamide, cellulose, aramid, nylon, polyester, polyparaphenylene benzobisoxazole, polyarylate, and Teflon. Among them, it is particularly preferable to include polypropylene (PP), which has excellent mechanical properties such as tensile strength, rigidity, surface hardness, abrasion resistance, and heat resistance, and chemical properties such as corrosion resistance.

More specifically, the sealant layer (113) may include polypropylene, cast polypropylene (CPP), acid modified polypropylene, polypropylene-butylene-ethylene copolymer, or a combination thereof.

The sealant layer (113) may have a single-layer structure or may have a multi-layer structure including two or more layers made of different polymer materials.

The sealant layer may have a total thickness of 60 $\mu$m to 100 $\mu$m, preferably 60 $\mu$m to 90 $\mu$m, and more preferably 60 $\mu$m to 80 $\mu$m. If the thickness of the sealant layer is too thin, the sealing durability and insulation may be reduced, and if it is too thick, the flexibility may be reduced and the total thickness of the pouch film laminate may increase, thereby lowering the energy density per volume.

*Sealing Part*

The sealing surface is characterized in that the outer insulating layer (111) as the first end (110b) of the outer film (110) is sealed with the sealant layer (113) as the second end (110c) by an adhesive film (114). The adhesive film (114) may be attached to the sealant layer (113) so that it may be bonded to the outer insulating layer (111) after enclosing the electrode assembly (160), and conversely, it may be attached to the outer insulating layer (111) so that it may be bonded to the sealant layer (113) after enclosing the electrode assembly (160). As described above, the secondary battery (100) according to an embodiment of the present invention may improve energy density, because the sealing surface is formed without a terrace part, and may have excellent sealing durability, because the adhesive film (114) is designed to satisfy the sealing index as described above.

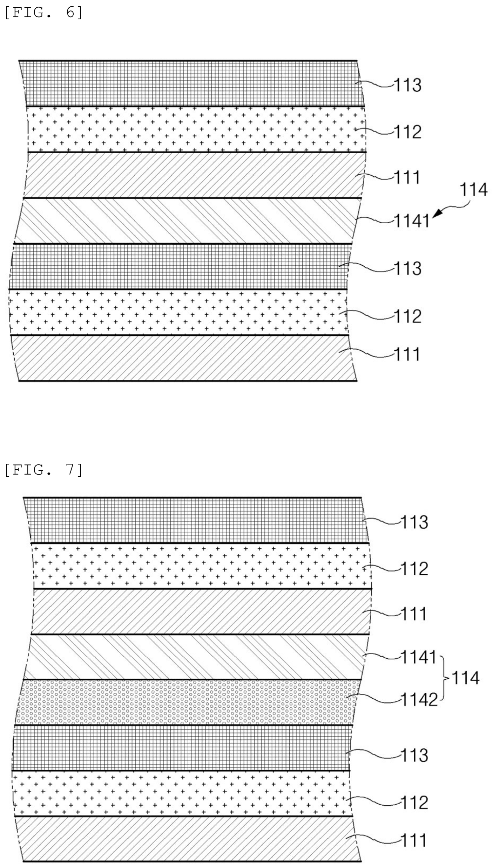

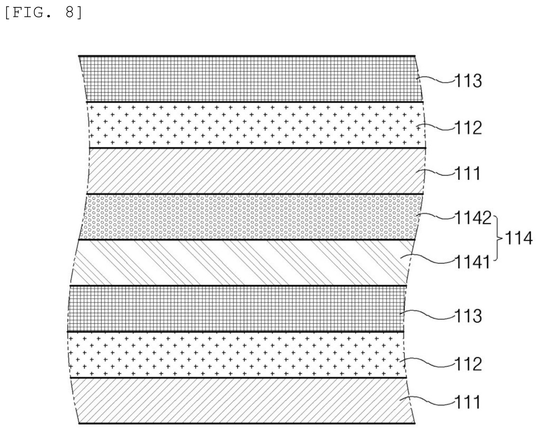

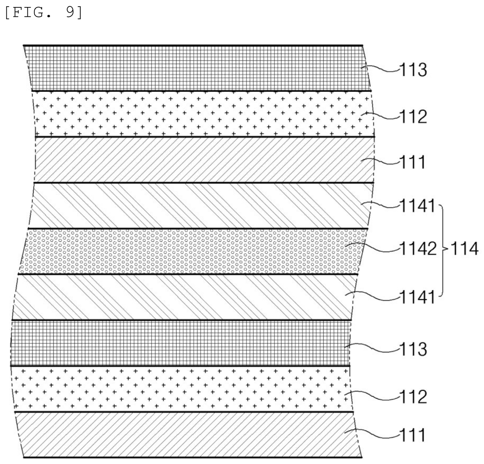

FIGS. 6 to 9 are enlarged cross-sectional views of portion B in FIG. 3. According to an embodiment of the present invention, the adhesive film (114) may have a single-layer structure of an adhesive layer (1141) as in FIG. 6, or a two-layer structure including a base film (1142) and an adhesive layer (1141) disposed on the base film as in FIGS. 7 and 8, or a three-layer structure including a base film (1142) and adhesive layers (1141, 1143) disposed on both sides of the base film as in FIG. 9, and the adhesive layer may include a rubber-based adhesive resin. Since the rubber-based adhesive resin has been described above, the description thereof will be omitted.

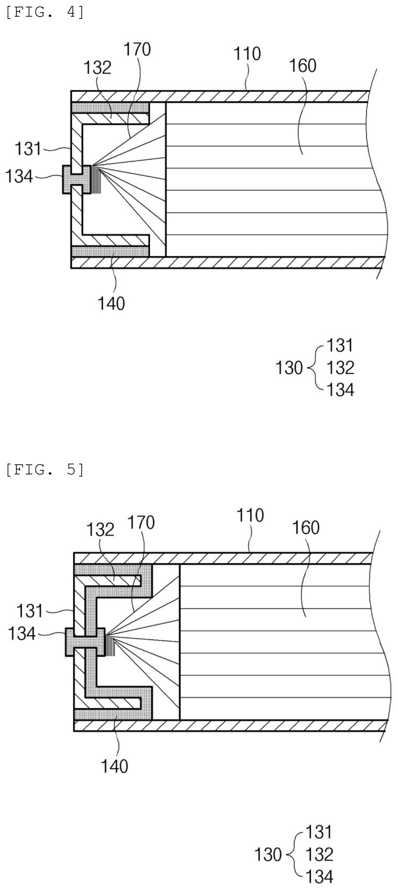

In the case of FIG. 5, an adhesive film (114) with a single-layer structure is shown. After a release film (not shown) that may exist on the adhesive layer (1141) is removed after being attached to the sealant layer (113) or the outer insulating layer (111) of the pouch cover (110), the electrode assembly (160) may been closed with the pouch cover (110), and then the outer insulating layer (111) or the sealant layer (113) may be attached.

An adhesive film (114) with a two-layer structure shown in FIGS. 7 and 8 may include a base film (1142) and an adhesive layer (1141). In this case, the base film (1142) may enclose the electrode assembly (160) after the adhesive film (114) is previously attached to the sealant layer (113) or the outer insulating layer (111) by heat fusion. Accordingly, the base film (1142) may include one or more selected from the group consisting of, for example, polyethylene terephthalate, polyethylene naphthalate, polyimide, cast polypropylene, high-density polyethylene, and low-density polyethylene. Preferably, if the base film (1142) is attached to the sealant layer (113) or the outer insulating layer (111) by heat fusion, the same material as the material of the surface to be attached may be applied, and in this case, excellent adhesive strength may be maintained.

In addition, the adhesive film (114) with a three-layer structure shown in FIG. 9 may have a base film (1142) positioned between adhesive layers (1141), and in this case, the rigidity of the adhesive film may be secured, so there is an advantage of no risk of damage during performing processes.

*Cover Member*

The cover member (130) may be a member that covers the outer material opening (115) of the outer film (110) as shown in FIGS. 2 and 3. In order to prevent the leakage of an electrolyte filled in the inner space (131) of the outer film (110), the cover member (130) may seal the outer material opening (115) of the outer film (110) together with a gasket member (140) described later.

The cover member (130) may include a first member (131) that blocks the outer material opening (115) as shown in FIG. 2. FIG. 4 is a cross-sectional view along line A-A of the secondary battery in FIG. 3. The first member (131) may be formed to correspond to the shape of the outer material opening (115) in order to block the outer material opening (115). FIG. 2 illustrates a first member (131) formed in a square shape (the shape of the outer material opening).

The first member (131) may be obtained from a material that is not easily permeable to moisture in order to seal the inner space (131) of the outer film (110). For example, the first member (131) may be obtained from a metal or resin, or may be obtained from a laminate sheet including a metal layer. The same may apply to a second member (132) described later.

The cover member (130) may include a second member (132) extending from the first member (131) as shown in FIG. 4. The second member (132) may be formed integrally with the first member (131) or may be formed as a separate body and then joined to the first member (131). The second member (132) may be positioned facing the inner surface of the outer film (110).

In general, a pouch-type outer material was prepared by forming a cup part on a pouch film and sealing the cup part with another pouch film. However, since the molding depth of the cup part was limited depending on the material properties of the pouch film, it was difficult to mold the cup part deeply enough to increase battery capacity, and the material and thickness of the pouch film had to be selected within restrictions. In addition, as the thickness of the pouch film became thinner during the molding of the cup part, defects such as cracks were likely to occur in the pouch-type outer material.

In contrast, in the case of the secondary battery (100) of the present embodiment, since the outer film (110) may be prepared without molding the cup part, and the electrode assembly (160) may be inserted into the outer film (110) through the outer material opening (115), the above limitations or defects may not occur, so the battery capacity may be easily increased by increasing the size of the outer film (110), the material and thickness of a sheet (110a) may be selected relatively freely, and defects such as cracks may not easily occur. For reference, in the case where the outer film (110) is prepared by rolling or folding the sheet (110a), the electrode assembly (160) may be positioned on the upper surface of the sheet (110a) in an unfolded state, and in this case, the outer film (110) may be prepared without molding the cup part.

In addition, the secondary battery (100) is superior not only to the general pouch-type batteries but also to prismatic batteries. In the case of prismatic batteries, if the volume expansion of an electrode assembly occurs during charging and discharging, the electrode assembly may be damaged due to the square metal can, which hardly experiences shape change. In contrast, in the case of the secondary battery of the present embodiment, if the volume expansion of the electrode assembly occurs during charging and discharging, the shape of the outer film may change in response, that is, the outer film may be stretched, so that damage to the electrode assembly may not occur.

*Gasket Member*

A gasket member (140) may be a member disposed between the cover member (130) and the outer film (110) as shown in FIGS. 2 and 3. The gasket member (140) may be disposed between the second member (132) of the cover member (130) and the inner surface of the outer film (110) as shown in FIG. 4.

The gasket member (140) may be formed to entirely enclose the cover member (130) as shown in FIGS. 2 and 3. For example, the gasket member (140) may be formed in a frame shape to enclose the second member (132) of the cover member (130). Alternatively, the gasket member (140) may be formed to entirely enclose not only the second member (132), but also the inner side of the first member (131) and the second member (132), i.e., the inner side of the cover member (130), as shown in FIG. 5. FIG. 5 is a cross-sectional view illustrating a first modification embodiment of the gasket member (140) in the secondary battery of FIG. 3.

The gasket member (140) may prevent the internal electrolyte from leaking through the space between the cover member (130) and the outer film (110).

*Specific Structure of Cover Member*

The cover member (130) may include an electrode terminal (134) as shown in FIG. 4. The electrode terminal (134) may be an electrically conductive member provided in the first member (131). The electrode terminal (134) may be a member that is exposed to the inner space (115) of the outer film (110) to be electrically connected with the electrode tabs (111) of the electrode assembly (110) and also exposed to the outside of the first member (131). An electrode terminal having an I-shaped cross-sectional shape is illustrated in FIG. 4. For example, if the electrode tabs (170) of the electrode assembly (160) are welded to the inner surface of the electrode terminal (134), and another device (not illustrated) is electrically connected with the outer surface of the electrode terminal (134), and another device and the electrode assembly (160) may be electrically connected.

The first member (131) may include an electrolyte injection hole (not shown) for injecting an electrolyte into the inner space (115) of the outer film (110). Through this, an electrolyte injection process and a degassing process after activation may be performed. For example, if the secondary battery (100) is positioned so that the first member (131) in which the electrolyte injection hole is provided faces upward, the electrolyte may be injected into the inner space (115) of the outer film (110) through the electrolyte injection hole. In the degassing process, the exhaustion of internal gas may be induced through the open electrolyte injection hole. After the electrolyte injection and degassing, the electrolyte injection hole may be closed by sealing or welding. Alternatively, a valve that may be opened and closed may be installed in the electrolyte injection hole so that the electrolyte injection hole may be opened only if necessary.

In general, a pouch-type outer material was provided with a receiving part for accommodating an electrode assembly and a pocket part for accommodating gas generated during activation, and after the gas in the pocket part was discharged through a degassing process, the pocket part was removed. As a result, there was a problem that a portion of the pouch-type outer material was always discarded. However, since the secondary battery (100) of the present embodiment may perform electrolyte injection and degassing through the electrolyte injection hole, such discarding of the outer material may not occur.

The second member (132) of the cover member (130) may be formed along the border of the first member (131) as shown in FIG. 5. In order to be firmly combined with the outer film (110), the second member (132) may be formed along the entire border of the first member (131), but it may also be considered to be formed along a portion of the border. FIG. 3 illustrates an embodiment of the second member (132) formed along the entire border of the first member (131).

The second member (132) may extend from the first member (131) in a direction facing the inner space (131) (right direction in FIG. 5). The second member (132) may be set to a length that contacts the electrode assembly (160). The electrode assembly (160) may be prevented from moving within the outer film (110).

## Battery Module

According to another embodiment of the present invention, a battery module including a plurality of pouch-type secondary batteries is provided.

The battery module means a battery assembly that is bundled in a certain number and placed in a frame to protect the pouch-type secondary batteries from external impact, heat, vibration, or the like.

In addition, according to another embodiment of the present invention, a battery pack including a plurality of the battery modules is provided, and the battery pack means a final form of a battery system mounted on an electric vehicle, or the like.

The battery module or battery pack may be used as a power source for one or more medium- or large-sized devices among power tools; electric cars including an electric vehicle (EV), a hybrid electric vehicle, and a plug-in hybrid electric vehicle(PHEV); and power storage systems.

## Examples and Comparative Examples

Hereinafter, the present invention will be explained in detail through particular embodiments. However, the embodiments below are only illustrations for assisting the understanding of the present invention, and do not limit the scope of the present invention. It is obvious to those skilled in the art that various changes and modifications are possible within the scope and technical idea of the description, and it is natural that such modifications and variations are within the scope of the appended claims.

### Example 1

#### Manufacture of Outer Film

On one side of an aluminum alloy thin film with 266 mm in width, 50 m in height, and 60 $\mu$m in thickness, a polyethylene terephthalate film with 266 mm in width, 50 m in height, and 12 $\mu$m in thickness and a nylon film with 266 mm in width, 50 m in height, and 25 $\mu$m in thickness were laminated, and on the other side, a cast polypropylene (CPP) film with 266 mm in width, 50 m in height, and 50 $\mu$m in thickness was laminated, thereby manufacturing an outer film having a structure of polyethylene terephthalate/nylon/aluminum alloy thin film/cast polypropylene.

Here, the polyethylene terephthalate and nylon are outer insulating layers, the aluminum alloy thin film is a gas barrier layer, and the cast polypropylene is a sealant layer.

#### Manufacture of Electrode Assembly

An electrode assembly was manufactured by laminating a positive electrode, a negative electrode and a porous polyethylene separator in a stacking manner. Then, an electrode lead was bonded to the electrode assembly.

#### Electrolyte Injection and Sealing

After that, the electrode assembly was enclosed with an outer film, and polyisoprene was applied as a rubber-based adhesive resin to the adhesive layer of the adhesive film having a single-layer structure, having a contact angle and a peel strength in electrolyte as described in Table 1 below, and the sealant layer and the outer insulating layer of the outer film were sealed using the same. Then, a lower cap was attached and sealed, and an electrolyte in which LiPF$_6$ was dissolved in a solvent (EC:EMC:DMC = 3:3:4 volume ratio) to be 1.0 M was injected, and an upper cap was attached and sealed to manufacture a secondary battery.

**Example 2**

A pouch-type secondary battery was manufactured in the same manner as in Example 1, except for applying an adhesive film using a styrene-isobutylene-styrene copolymer (SIBS) as the rubber-based adhesive resin, having the contact angle and peel strength in an electrolyte as described in Table 1 below.

**Example 3**

A secondary battery was manufactured in the same manner as in Example 1, except for applying an adhesive film using polyisobutylene as the rubber-based adhesive resin, having the contact angle and peel strength in an electrolyte as described in Table 1 below.

**Example 4**

A secondary battery was manufactured in the same manner as in Example 1, except for applying an adhesive film using an ethylene-propylene-diene copolymer (EPDM) as the rubber-based adhesive resin, having the contact angle and peel strength in an electrolyte as described in Table 1 below.

**Comparative Example 1**

A secondary battery was manufactured in the same manner as in Example 1, except for applying an adhesive film using polyacrylate as an adhesive resin, having the contact angle and peel strength in an electrolyte as described in Table 1 below.

**Comparative Example 2**

A secondary battery was manufactured in the same manner as in Example 1, except for applying an adhesive film using polyvinyl acetate as an adhesive resin, having the contact angle and peel strength in an electrolyte as described in Table 1 below.

**Comparative Example 3**

A secondary battery was manufactured in the same manner as in Example 1, except for applying an adhesive film using polydimethylsiloxane (PDMS) as an adhesive resin, having the contact angle and peel strength in an electrolyte as described in Table 1 below.

**Comparative Example 4**

A secondary battery was manufactured in the same manner as in Example 1, except for applying an adhesive film using polytetrafluoroethylene (PTFE) as an adhesive resin, having the contact angle and peel strength in an electrolyte as described in Table 1 below.

In Table 1 below, the contact angle and peel strength in an electrolyte were measured using the methods below.

1) Contact angle: Using a Phoenix mt from SEO Co., a drop of distilled water was dropped on the adhesive surface of the adhesive film at room temperature (25°C), and the angle formed between the surface and the water droplet was measured within 5 seconds.

2) Peel strength in electrolyte: For each of the outer films of the Examples and Comparative Examples, in an attached state of the sealant layer and the outer insulating layer using an adhesive film, without an electrode assembly, and the outer film was impregnated in an electrolyte in which an organic solvent of a mixture of ethylene carbonate (EC), ethyl methyl carbonate (EMC), and dimethylene carbonate (DMC) in a volume ratio of 3:3:4 and a lithium salt of 1.0 M LiPF$_6$ were mixed, at 60°C for 24 hours, and then a T-peel peel test was performed at a speed of 300 mm/sec.

[Table 1]

|  | Sealing index | Contact angle (°) | Electrolyte peel strength (gf/25 mm) |
|---|---|---|---|
| Example 1 | 3.83 | 120 | 460 |

(continued)

|  | Sealing index | Contact angle (°) | Electrolyte peel strength (gf/25 mm) |
|---|---|---|---|
| Example 2 | 1.33 | 90 | 120 |
| Example 3 | 5.45 | 110 | 600 |
| Example 4 | 2.40 | 100 | 240 |
| Comparative Example 1 | 0.29 | 70 | 20 |
| Comparative Example 2 | 0.08 | 60 | 5 |
| Comparative Example 3 | 0.93 | 107 | 100 |
| Comparative Example 4 | 0.009 | 110 | 1 |

**Experimental Example 1**

The secondary batteries manufactured in the Examples and Comparative Examples were evaluated as follows, and the results are shown in Table 2.

1) Moisture penetration test: For each of the secondary batteries of the Examples and Comparative Examples, after storing in a chamber with a temperature of 60°C and a relative humidity of 90% for 16 weeks, the moisture content was measured by measuring the HF concentration in the electrolyte inside the outer film.

2) Electrolyte leakage test: The amount of electrolyte leakage was measured by injecting 20 g of electrolyte into the case using ELT3000 from INFICON Co., and then measuring the amount of liquid and/or gaseous electrolyte leaking from the inside of the outer film to the outside when a vacuum atmosphere was created outside.

[Table 2]

|  | Moisture penetration amount (ppm) | Electrolyte leakage amount (g) |
|---|---|---|
| Example 1 | 800 | <0.1 |
| Example 2 | 1,200 | <0.1 |
| Example 3 | 1,000 | <0.1 |
| Example 4 | 1,100 | <0.1 |
| Comparative Example 1 | 2,000 | 3 |
| Comparative Example 2 | 4,000 | 5 |
| Comparative Example 3 | 3,000 | <1 |
| Comparative Example 4 | 10,000 | 18 |

Referring to Table 2, in the cases of Examples 1 to 4, it can be confirmed that the amount of moisture penetration is significantly less than that of the Comparative Examples, and that the electrolyte also hardly leaked. However, it can be confirmed that the contact angle is small and the peel strength in an electrolyte is very small, so that not only the amount of moisture penetration but also the amount of electrolyte leakage is considerably large. In other words, if the sealing index is less than 1.00, even if the contact angle is large and the peel strength in an electrolyte satisfies a certain level, the amount of moisture penetration may be high as in Comparative Example 3, and in Comparative Examples 1, 2, and 4, which are significantly less than 1.00, it can be confirmed that not only the amount of moisture penetration but also the amount of electrolyte leakage is considerably poor. In particular, in the case of Comparative Example 4, the peel strength is very weak, so that the sealing is not performed normally, and it can be found that the amount of moisture penetration and the amount of electrolyte leakage are considerable.

[Description of Symbols]

11: Pouch-type battery case
12, 13: Cup parts
14: Receiving space
15: Terrace part
100: Pouch-type secondary battery
110: Outer film
110a: Sheet, 110b: First end, 110c: Second end
111: Outer insulating layer, 112: Gas barrier layer, 113: Sealant layer
114: Adhesive film, 1141: Adhesive layer, 1142: Base film
130: Cover member
131: First member
132: Second member
134: Electrode terminal
140: Gasket member
160: Electrode assembly
170: Electrode tab

**Claims**

1. A secondary battery comprising:

   an electrode assembly;
   an outer film which has an inner space for accommodating the electrode assembly and which has an outer material opening for communicating the inner space with the outside; and
   a cover member covering the outer material opening of the outer film,
   wherein the outer film has a sealing surface at which the inner surface and the outer surface of the outer film meet in a direction perpendicular to the outer material opening and are joined by an adhesive film, and
   the adhesive film has a sealing index (SI) defined by the following Formula 1 of 1.00 to 6.00:

   $$[\text{Equation 1}]$$

   $$SI = PS/CA$$

   in Equation 1, SI of the adhesive film is a sealing index,
   CA is a unitless number with the unit of °, which is a contact angle at the surface of an adhesive surface of the adhesive film, and PS is a unitless number with the unit of gf/25mm, which is a peel strength in an electrolyte and is obtained from a T-peel peeling test at a speed of 300 mm/sec after immersing a sealed pouch-type case in an electrolyte solution for 24 hours.

2. The secondary battery according to claim 1, wherein the contact angle (CA) is 80° or more.

3. The secondary battery according to claim 1, wherein the peel strength (PS) in an electrolyte is 100 gf/25 mm or more.

4. The secondary battery according to claim 1, wherein the sealing index is 1.30 to 5.50.

5. The secondary battery according to claim 1, further comprising a gasket member disposed between the cover member and the outer film.

6. The secondary battery according to claim 1,

   wherein the adhesive film comprises a rubber-based adhesive resin, and
   the rubber-based adhesive resin comprises one or more selected from the group consisting of natural rubber, epoxidized natural rubber, polyisobutylene rubber, styrene-butadiene rubber, styrene-isobutylene rubber, epoxidized styrene-butadiene-styrene rubber, styrene-isobutylene-styrene rubber, epoxidized styrene-isobutylene-styrene rubber, styrene-ethylene-alpha-olefin-styrene rubber, and ethylene-propylene-diene rubber.

7. The secondary battery of a pouch-type according to claim 1,

wherein the adhesive film has a single-layer structure composed of an adhesive layer, a double-layer structure composed of a base film and an adhesive layer disposed on the base film, or a three-layer structure composed of a base film and adhesive layers disposed on both sides of the base film, and
the adhesive layer comprises a rubber-based adhesive resin.

8. The secondary battery of a pouch-type according to claim 7, wherein the base film comprises one or more selected from the group consisting of polyethylene terephthalate, polyethylene naphthalate, polyimide, cast polypropylene, high-density polyethylene and low-density polyethylene.

9. The secondary battery of a pouch-type according to claim 1,

   wherein the outer film comprises a sealant layer on the inner surface and an outer insulating layer on the outer surface, and
   the sealant layer comprises one or more selected from the group consisting of polypropylene, cast polypropylene, acid-modified polypropylene, and polypropylene-butylene-ethylene copolymer.

10. The secondary battery of a pouch-type according to claim 1,

    wherein the outer film comprises a sealant layer on the inner surface and an outer insulating layer on the outer surface, and
    the outer insulating layer comprises one or more selected from the group consisting of polyethylene terephthalate and nylon.

11. The secondary battery according to claim 1, wherein the outer film has a subsequently laminated structure of a sealant layer, a gas barrier layer and an outer insulating layer from the innermost surface.

12. A battery module comprising a plurality of the secondary batteries of claim 1.

[FIG. 1]

[FIG. 2]

[FIG. 3]

100

EP 4 726 876 A1

[FIG. 4]

[FIG. 5]

19

[FIG. 6]

[FIG. 7]

[FIG. 8]

[FIG. 9]

# INTERNATIONAL SEARCH REPORT

| International application No. |
| --- |
| **PCT/KR2024/012083** |

| **A.** | **CLASSIFICATION OF SUBJECT MATTER** |
| --- | --- |

**H01M 50/198**(2021.01)i; **H01M 50/105**(2021.01)i; **H01M 50/126**(2021.01)i; **H01M 50/116**(2021.01)i; **H01M 50/211**(2021.01)i; **C09J 7/30**(2018.01)i

According to International Patent Classification (IPC) or to both national classification and IPC

| **B.** | **FIELDS SEARCHED** |
| --- | --- |

Minimum documentation searched (classification system followed by classification symbols)

H01M 50/198(2021.01); C09J 7/25(2018.01); H01M 10/04(2006.01); H01M 2/02(2006.01); H01M 2/08(2006.01); H01M 50/124(2021.01); H01M 50/141(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배터리(battery), 실링(sealing), 점착 필름(adhesive film), 박리 강도(peel strength)

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| A | KR 10-2015-0069837 A (SAMSUNG SDI CO., LTD.) 24 June 2015 (2015-06-24)<br>See paragraphs [0059] and [0065] and figure 6. | 1-12 |
| A | KR 10-2020-0047183 A (TAPEX INC. et al.) 07 May 2020 (2020-05-07)<br>See paragraphs [0048]-[0049] and claim 1. | 1-12 |
| A | KR 10-2018-0008669 A (TOPPAN PRINTING CO., LTD.) 24 January 2018 (2018-01-24)<br>See paragraphs [0081]-[0091] and claim 1. | 1-12 |
| A | KR 10-2023-0092223 A (LG ENERGY SOLUTION, LTD.) 26 June 2023 (2023-06-26)<br>See paragraphs [0074]-[0076] and figures 4-5. | 1-12 |
| A | CN 207542284 U (GUANGZHOU GUANG ZHU BATTERY CO., LTD.) 26 June 2018 (2018-06-26)<br>See claims 1-4 and figures 1-4. | 1-12 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **14 November 2024** | **15 November 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/012083**

| Patent document cited in search report | | | Publication date (day/month/year) | Patent family member(s) | | | Publication date (day/month/year) |
|---|---|---|---|---|---|---|---|
| KR | 10-2015-0069837 | A | 24 June 2015 | CN | 104710946 | A | 17 June 2015 |
| | | | | CN | 104710946 | B | 03 May 2022 |
| | | | | EP | 2884557 | A1 | 17 June 2015 |
| | | | | EP | 2884557 | B1 | 06 December 2017 |
| | | | | JP | 2015-118921 | A | 25 June 2015 |
| | | | | JP | 7060316 | B2 | 26 April 2022 |
| | | | | US | 10833297 | B2 | 10 November 2020 |
| | | | | US | 2015-0171383 | A1 | 18 June 2015 |
| KR | 10-2020-0047183 | A | 07 May 2020 | KR | 10-2692266 | B1 | 06 August 2024 |
| KR | 10-2018-0008669 | A | 24 January 2018 | CN | 106159124 | A | 23 November 2016 |
| | | | | CN | 106159124 | B | 27 July 2021 |
| | | | | CN | 113540625 | A | 22 October 2021 |
| | | | | CN | 205944146 | U | 08 February 2017 |
| | | | | EP | 3297054 | A1 | 21 March 2018 |
| | | | | EP | 3297054 | B1 | 04 December 2019 |
| | | | | JP | 6819578 | B2 | 27 January 2021 |
| | | | | US | 10629863 | B2 | 21 April 2020 |
| | | | | US | 2018-0108880 | A1 | 19 April 2018 |
| | | | | WO | 2016-181867 | A1 | 29 March 2018 |
| | | | | WO | 2016-181867 | A1 | 17 November 2016 |
| KR | 10-2023-0092223 | A | 26 June 2023 | None | | | |
| CN | 207542284 | U | 26 June 2018 | None | | | |

Form PCT/ISA/210 (patent family annex) (July 2022)